# EUROPÄISCHE PATENTSCHRIFT

(11) **EP 0 458 789 B1**
(45) Veröffentlichungstag und Bekanntmachung des Hinweises auf die Patenterteilung: **23.02.1994**
(21) Anmeldenummer: 90900752.8
(22) Anmeldetag: 15.12.1989
(51) Int. Cl.: B01D 3/34, B01D 1/14, C23G 5/04

(54) **VERFAHREN UND VORRICHTUNG ZUM TRENNEN VON LÖSEMITTELN UND ÖLEN**
PROCESS AND DEVICE FOR SEPARATING SOLVENTS AND OILS
PROCEDE ET DISPOSITIF POUR LA SEPARATION DE SOLVANTS ET D'HUILES

(43) Veröffentlichungstag der Anmeldung: 04.12.1991
(73) Patentinhaber: Flühs Drehtechnik GmbH., D-58515 Lüdenscheid (DE)
(72) Erfinder: VOM DAHL, Uwe, D-5880 Lüdenscheid (DE); WOLFF, Heinz, D-5880 Lüdenscheid (DE)
(74) Vertreter: Dörner, Lothar, Dipl.-Ing.
(86) Internationale Anmeldenummer: DE8900774
(87) Internationale Veröffentlichungsnummer: WO9108812

(56) Entgegenhaltungen:
- EP-A- 0 030 200
- EP-A- 0 080 407
- DE-A- 3 229 030
- DE-C- 348 332
- DE-C- 871 440
- GB-A- 2 142 549

## Beschreibung

### Technisches Gebiet:

Die Erfindung betrifft ein Verfahren zum Trennen von Lösemittel und Ölen einer Öl-Lösemittel-Lösung, bei dem die Öl-Lösemittel-Lösung in einem Verdunstungskessel mit einem trockenen Gas bzw. Gasgemisch verwirbelt wird, das mit Lösemittel angereicherte Gas abgeführt und abgekühlt, das dabei ausgetaute Lösemittel entfernt und das lösemittelfreie Öl abgelassen wird, sowie eine Vorrichtung zur Durchführung des Verfahrens.

In vielen Bereichen der Industrie ist es unvermeidbar, daß Lösemittel, z.B. chlorierte Kohlenwasserstoffe (-CKW) oder fluorierte Kohlenwasserstoffe (-FKW), in Bearbeitungsöle gelangen. Beispiel hierfür ist die Entfernung bzw. Reinigung öliger Metallteile in CKW- oder FKW-Waschanlagen.

### Stand der Technik:

Aus der DE-A-3229030 sind ein Verfahren und eine Vorrichtung zur Nachbehandlung lösungsmittelhaltiger, flüssiger, brennbarer Rückstände von Maschinen bekannt, z.B. zum Entfernen von chemischen Lösungsmitteln aus flüssigen Rückständen, die ölhaltig sein können und aus Bearbeitungsmaschinen stammen. Die Lösung aus Rückständen und Lösungsmitteln wird in einen beheizten Behälter gegeben. Aus der Umgebung angesaugte, erhitzte Luft wird im Bereich des Behälterbodens durch die Rückstände geleitet. Die erhitzte Luft nimmt dabei in den Rückständen enthaltenes Lösungsmittel auf. Die mit Lösungsmittel beladene Luft wird über einen Kondensator ins Freie geleitet. Das im Kondensator verflüssigte Lösungsmittel fließt in einen Sammelbehälter. Die nachbehandelten flüssigen Rückstände werden an der tiefsten Stelle des Bodens des Behälters abgezogen und einem Transportfaß zugeleitet in dem sie zu einer Verbrennungsanlage transportiert werden. Das bekannte Verfahren/die bekannte Vorrichtung dient also dazu, Rückstände der genannten Art so weit nachzubehandeln, daß sie einer Verbrennung zugeführt werden können. Die nachbehandelten Rückstände sind aber` nach den heutigen gesetzlichen Bestimmungen als Sondermüll zu betrachten; kostenspielige Entsorgung durch Verbrennung bleibt die Folge.

In der älteren Patentanmeldung EP-A-0347605 entsteht als Abschluß eines Verfahrens der eingangs genannten Art lösemittelfreies Öl dadurch, daß das durch starkes Abkühlen vom Lösemittel befreite Gas erwärmt, erneut mit der Öl-Lösemittel-Lösung verwirbelt und das lösemittelfreie Öl abgelassen wird. Dabei wird die Öl-Lösemittel-Lösung entweder in einen Verdunstungskessel gefüllt, in die Lösung das trockene Gas gedrückt und mit der Lösung verwirbelt; oder in einen Verdunstungskessel gesprüht, quer zu dem dadurch entstehenden Nebel der Öl-Lösemittel-Lösung das trockene Gas geführt und mit der Lösung verwirbelt.

### Darstellung der Erfindung:

Auch der Erfindung liegt die Aufgabe zugrunde, ein wirtschaftlich vertretbares Verfahren zu schaffen, mit dessen Hilfe eine Öl-Lösemittel-Lösung so zu trennen ist, daß das Öl praktisch lösemittelfrei ist, dabei aber den Weg wesentlich zu verlängern, auf dem die Lösung und das Gas einander berühren. Gemäß der Erfindung wird diese Aufgabe dadurch gelöst, daß die Öl-Lösemittel-Lösung von einer Düse als Nebel in der Form eines Sprühkegels mit der Düse als zentralem Punkt in einen Verdunstungskessel abgesprüht und das Gas bzw. Gasgemisch in Axialrichtung des Sprühkegels durch den Nebel geführt wird.

Bei der Erfindung wird das trockene Gas in Axialrichtung zu dem Nebel der in den Verdunstungskessel gesprühten Öl-Lösemittel-Lösung geführt und mit der Lösung verwirbelt. Es ergibt sich eine wesentliche Verlängerung des Weges, auf dem die durch das Versprühen tröpfchenweise, also mit großer Oberfläche, vorliegende Lösung und das Gas einander berühren. Durch die sehr starke Verwirbelung der Öl-Lösemittel-Lösung mit trockenem Gas wird die Verdunstung des Lösemittels um ein Vielfaches beschleunigt. Das Ergebnis wird erzielt unabhängig davon, ob in einer Ausgestaltung der Erfindung das Gasgemisch in Strömungsrichtung mit der Öl-Lösemittel-Lösung geführt wird, oder in einer anderen Ausgestaltung in Gegenströmungsrichtung. In jedem Fall ist der Weg, auf dem die Teilchen sich berühren, länger als wenn das Gas quer zu der Lösung geführt würde. Das mit Lösungsmittel angereicherte Gas wird dann durch starkes Abkühlen getrocknet. Das dabei ausgetaute Lösemittel wird entfernt. Das getrocknete Gas wird abgeführt. Als Gas werden - in Abhängigkeit vom Lösemittel - beispielsweise Luft, Kohlendioxid oder Stickstoff verwendet. In Ausgestaltung der Erfindung wird das durch das starke Abkühlen getrocknete Gas erwärmt und erneut mit der Öl-Lösemittel-Lösung verwirbelt. Das Lösemittel ist einer weiteren Verwendung zuführbar; das Gas bleibt im geschlossenen Kreislauf und kann erneut verwendet werden. Das am Abschluß eines Verfahrens lösemittelfreie Öl wird abgelassen.

In Versuchen hat sich das Verfahen nach der Erfindung bei der Trennung von chlorierten Kohlenwasserstoffen in Bearbeitungsölen bewährt. Lösemittelanteile von kleiner 0,1 % wurden ohne weiteres erreicht.

Nach der ersten Verwirbelung von trockenem Gas und Öl-Lösemittel-Lösung in dem Verdunstungskessel ist die Lösung noch nicht in dem gewünschten Maß von dem Lösemittel frei. Die Lösung wird daher mehrfach dem Verdunstungskessel zugeführt. Nach jedem Durchlauf ist in der Lösung ein geringerer Anteil von Lösemittel.

Zwei Arten von Vorrichtungen zur Durchführung des Verfahrens nach der Erfindung werden bevorzugt: Bei der einen Vorrichtung ist in dem Verdunstungskessel ein Prallteller angeordnet, auf den die Öl-Lösemittel-Lösung gelenkt, und von dem sie abgesprüht ist; bei der anderen Vorrichtung ist eine Düse verwendet, über die die Öl-Lösemittel-Lösung in den Verdunstungskessel gesprüht ist. In beiden Fällen wird dem Lösemittel Tröpfchenform gegeben und somit die größtmögliche Oberfläche für den Angriff des Gases erreicht.

In Ausgestaltung sind die Vorrichtungen zur Durchführung des Verfahrens gekennzeichnet durch eine Kühleinrichtung, die für die Zuführung des mit Lösemittel angereicherten Gases mit dem Verdunstungskessel verbunden und die mit Leitungen für die Entfernung des ausgetauten Lösemittels und die Abführung des getrockneten Gases versehen ist. Mit einer solchen Vorrichtung wurden die vorgenannten Ergebnisse erzielt.

Der Wirkungsgrad der Vorrichtung nach der Erfindung wird weiter erhöht, wenn zwischen der Auslaßöffnung an dem Verdunstungskessel für das mit Lösemittel angereicherte Gas und der Kühleinrichtung ein Ventilator und/oder in der Zuleitung in Strömungsrichtung des Gases vor dem Verdunstungskessel ein drosselbares Ventil angeordnet ist. Hierdurch wird in dem Verdunstungskessel ein Unterdruck einstellbar, der die Verdunstung des Lösemittels begünstigt, in dem Gas-Gas-Wärmetauscher ein Überdruck, der die Trennung des Lösemittels von dem Gas begünstigt.

In weiteren Vorrichtungsansprüchen sind Ausgestaltungen und Weiterbildungen der Erfindung beschrieben.

### Kurze Beschreibung der Zeichnung:

Zwei Ausführungsbeispiele für die Vorrichtung nach der Erfindung sind in der Zeichnung dargestellt und werden nachfolgend im einzelnen beschrieben. Die Figuren zeigen in schematischer Darstellung je eine Vorrichtung zum Trennen chlorierter Kohlenwasserstoffe von Bearbeitungsölen aus einer Lösung mit Hilfe von Luft.

### Bester Weg zur Ausführung der Erfindung:

In einem Verdunstungskessel 2 wird eine Öl-Lösemittel-Lösung, z.B. eine Lösung aus 70 % Öl und 30 % Trichloräthylen, mit einem trockenen Gas oder Gasgemisch verwirbelt, das dem Verdunstungskessel 2 zugeführt wird. Das mit Lösemittel angereicherte Gas wird über eine an den Verdunstungskessel 2 angeschlossene Auslaßleitung 6 einer Kühlvorrichtung zugeführt.

Die Kühlvorrichtung weist einen Gas-Gas-Wärmetauscher 7 auf, in dem eine Vorkühlung erfolgt. Dem Gas-Gas-Wärmetauscher 7 nachgeordnet ist ein Kältemittel-Gas-Wärmetauscher 8. Die Aufteilung des Kühlvorgangs in eine Vorkühlung und eine Nachkühlung/Trocknung verbessert den Wirkungsgrad der Vorrichtung wesentlich. Die Temperatur im Kältemittel-Gas-Wärmetauscher reicht bis ca. - 35°C.

Das in dem Gas-Gas-Wärmetauscher 7 vorgekühlte mit Lösemittel angereicherte Gas gelangt über eine Leitung 12 in den Kältemittel-Gas-Wärmetauscher 8. In dem Wärmetauscher 8 erfolgt eine Trocknung durch starkes Abkühlen. Das Kältemittel ist in einer Kältemaschine 9, die in der Zeichnung als Schaltblock dargestellt ist, auf die gewünschte Temperatur gebracht. Das in dem Kältemittel-Gas-Wärmetauscher 8 ausgetaute Lösemittel wird über einen Kondensatableiter 10 entfernt und kann erneut verwendet werden. Das getrocknete kalte Gas gelangt im Gegenstrom über eine Leitung 13 wieder in den Gas-Gas-Wärmetauscher 7, wo es auf bis zu ca. 80°C erhitzt wird. Von dort aus wird es über eine Zuleitung 16 wieder in den Verdunstungskessel 2 geleitet.

In der Auslaßleitung 6 ist ein Ventilator 22 vorgesehen. Der Ventilator kann auch in der Leitung 12 vorgesehen sein. In der Zuleitung 16 ist eine Heizvorrichtung 20 angeordnet, in der die Erhitzung der trockenen Luft auf bis zu ca. 95°C erfolgt. Zwischen Heizvorrichtung 20 und Einlaßöffnung kann ein drosselbares Ventil angeordnet sein. Die Gasmenge im Kreislauf beträgt hier ca. 150 l.

Die Öl-Lösemittel-Lösung wird aus einem Behälter 17 mittels einer Pumpe 14 über eine Leitung 15 geführt. In der Leitung 15 ist eine Heizvorrichtung 23 für die Öl-Lösemittel-Lösung angeordnet. Die Leitung 15 durchsetzt die Wandung oder den Deckel des Verdunstungskessels 2. Die Leitung 15 mündet in einer Düse 24. Von der Düse 24 wird die Öl-Lösemittel-Lösung als Nebel abgesprüht. Mit der Düse 24 als zentralem Punkt bildet sich ein Sprühkegel 25. Die Düse 24 ist in der Mittelachse eines Innenrohres 26 angeordnet. Auch das trockene Gas aus der Zuleitung 16 gelangt in den Bereich des Innenrohres 26. Das trockene Gas mischt sich mit der die Düse 24 verlassenden Öl-Lösemittel-Lösung innig.

Mit dem Behälter 17 ist ein Auslaß 11 verbunden. Abhängig von der Anreicherung der Öl-Lösemittel-Lösung mit Lösemittel und dem Wirkungsgrad des Trennvorgangs in dem Verdunstungskessel 2 wird der Kreislauf abgebrochen, wenn in dem Behälter 17 nur noch lösemittelfreies Öl vorhanden ist.

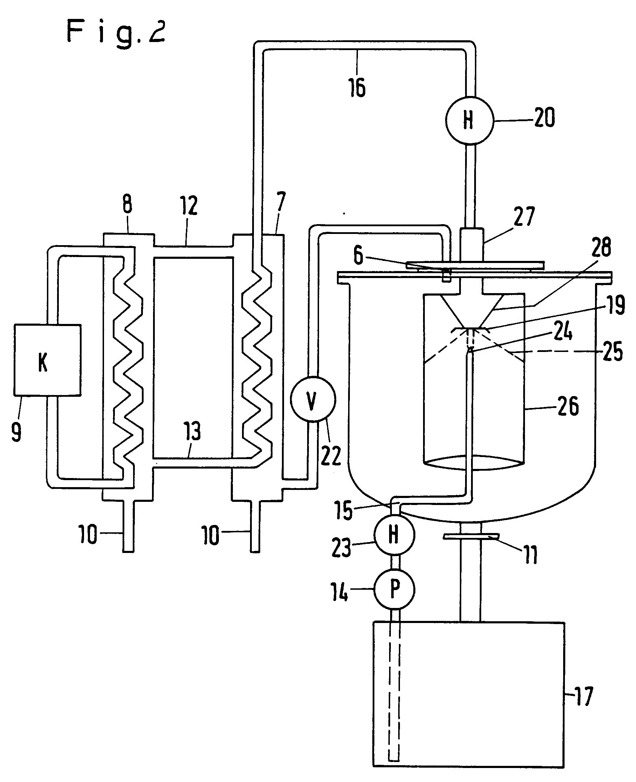

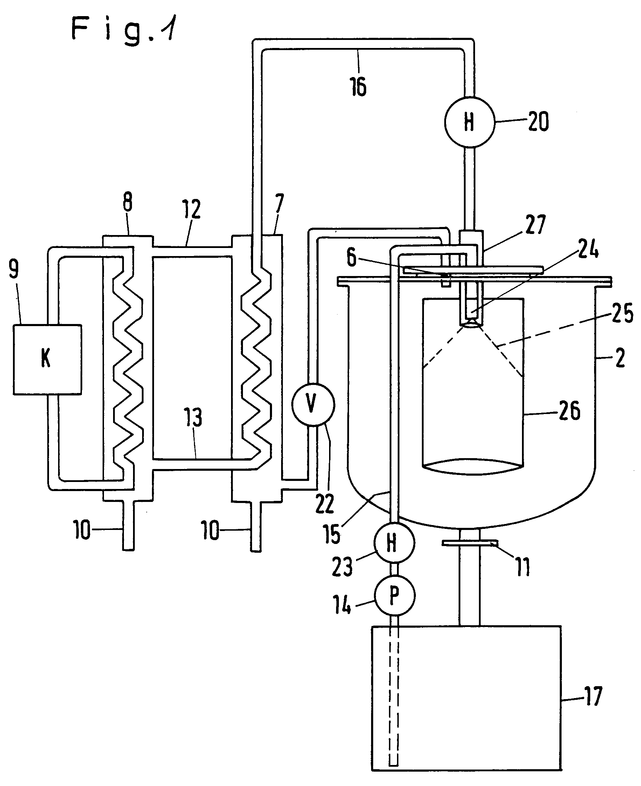

Bei dem in Figur 1 dargestellten Ausführungsbeispiel ist das Gas in Strömungsrichtung mit der Öl-Lösemittel-Lösung geführt. Bei dieser Ausführung durchsetzt die Leitung 15 mit der Öl-Lösemittel-Lösung den Deckel des Verdunstungskessels 2. Der Sprühkegel 25 mündet direkt auf der Innenwandung des Innenrohres 26. Um den die Düse 24 einschließenden Teil der Leitung 15 ist ein Rohrstück 27 angeordnet, in dem die Zuleitung 16 für das trockene Gas mündet.

Bei dem in Figur 2 dargestellten Ausführungsbeispiel ist das Gas in Gegenströmungsrichtung zu der Öl-Lösemittel-Lösung geführt. Die Leitung 15 durchsetzt den Verdunstungskessel 2 im Bereich seines Bodens. Die Düse 24 ist von unten gegen den Prallteller 19 gerichtet, der mittels eines Gestänges 28 an dem Innenrohr 26 befestigt ist. Die von dem Prallteller 19 absprühende Lösung bildet den Sprühkegel 25. Das Rohrstück 27 ist bei dieser Ausführung auf der der Düse 24 abgewandten Seite des Prallteller 19 angeordnet.

### Gewerbliche Verwertbarkeit:

Das Verfahren und die Vorrichtung dienen zur Trennung von Lösemitteln und Ölen aus einer Öl-Lösemittel-Lösung, insbesondere von chlorierten oder fluorierten Kohlenwasserstoffen aus Bearbeitungsölen.

## Patentansprüche

1. Verfahren zum Trennen von Lösemitteln und Ölen einer Öl-Lösemittel-Lösung, bei dem die Öl-Lösemittel-Lösung in einem Verdunstungskessel (2) mit einem trockenen Gas bzw. Gasgemisch verwirbelt wird, das mit Lösemittel angereicherte Gas abgeführt und abgekühlt, das dabei ausgetaute Lösemittel entfernt und das lösemittelfreie Öl abgelassen wird, dadurch gekennzeichnet, daß die Öl-Lösemittel-Lösung von einer Düse (24) als Nebel in der Form eines Sprühkegels (25) mit der Düse (24) als zentralem Punkt abgesprüht und das Gas bzw. Gasgemisch in Axialrichtung des Sprühkegels (25) durch den Nebel geführt wird.

2. Verfahren nach Anspruch 1, dadurch gekennzeichnet, daß das durch starkes Abkühlen vom Lösemittel befreite Gas erwärmt und erneut mit der Öl-Lösemittel-Lösung verwirbelt wird.

3. Verfahren nach Anspruch 1 oder 2, dadurch gekennzeichnet, daß Gas- und Öl-Lösemittel-Lösungsstrom im Gleichstrom geführt werden.

4. Verfahren nach Anspruch 1 oder 2, dadurch gekennzeichnet, daß Gas- und Öl-Lösemittel-Lösunsstrom im Gegenstrom geführt werden

5. Vorrichtung zum Trennen von Lösemitteln und Ölen einer Öl-Lösemittel-Lösung, bei dem die Öl-Lösemittel-Lösung in einem Verdunstungskessel (2) mit einem trockenen Gas bzw. Gasgemisch verwirbelbar ist, das mit Lösemittel angereicherte Gas abführbar und abkühlbar, das dabei ausgetaute Lösemittel entfernbar und das lösemittelfreie Öl abloßbar ist, dadurch gekennzeichnet, daß die Öl-Lösemittel-Lösung von einer in dem Verdunstungskessel (2) angeordneten Düse (24) auf einen Prallteller (19) lenkbar und von diesem als Nebel in der Form eines Sprühkegels (25) mit der Düse (24) als zentralem Punkt absprühbar ist und das Gas bzw. Gasgemisch in Axialrichtung des Sprühkegels (25) durch den Nebel führbar ist.

6. Vorrichtung zum Trennen von Lösemitteln und Ölen einer Öl-Lösemittel-Lösung, bei dem die Öl-Lösemittel-Lösung in einem Verdunstungskessel (2) mit einem trockenen Gas bzw. Gasgemisch verwirbelbar ist, das mit Lösemittel angereicherte Gas abführbar und abkühlbar, das dabei ausgetaute Lösemittel entfernbar und das lösemittelfreie Öl abloßbar ist, dadurch gekennzeichnet, daß die Öl-Lösemittel-Lösung von einer von einem in dem Verdunstungskessel (2) vorgesehenen Innenrohr umgebenen Düse (24) als Nebel in der Form eines Sprühkegels (25) mit der Düse (24) als zentralem Punkt absprühbar ist und das Gas bzw. Gasgemisch in Axialrichtung des Sprühkegels (25) durch den Nebel führbar ist.

7. Vorrichtung nach Anspruch 6, dadurch gekennzeichnet, daß die Düse (24) von einem Rohrstück (27) umgeben ist, über das das trockene Gas dem Verdunstungskessel (2) zuführbar ist.

8. Vorrichtung nach Anspruch 6 in Verbindung mit Anspruch 5, dadurch gekennzeichnet, daß der Prallteller (19), gegen den die Düse (24) gerichtet ist in dem Innenrohr (26) vorgesehen ist.

9. Vorrichtung nach einem der Ansprüche 5 bis 8 gekennzeichnet durch eine Kühleinrichtung (7; 8) die für die Zuführung des mit Lösemittel angereicherten Gases mit dem Verdunstungskessel (2) verbunden und die mit Leitungen für die Entfernung des ausgetauten Lösemittels sowie die Abführung des getrockneten Gases versehen ist.

10. Vorrichtung nach Anspruch 9, dadurch gekennzeichnet, daß zwischen einer Auslaßöffnung (6) an dem Verdunstungskessel (2) für das mit Lösemittel angereicherte Gas und der Kühleinrichtung (7; 8) ein Ventilator (22) angeordnet ist.

11. Vorrichtung nach Anspruch 9 oder 10, dadurch gekennzeichnet, daß die Kühleinrichtung (7; 8) in einen Gas-Gas-Wärmetauscher (7) zur Vor-` kühlung und einen nachgeordneten Kältemittel-Gas-Wärmetauscher (8) zur Trocknung des mit Lösemittel angereicherten Gases geteilt ist.

12. Vorrichtung nach Anspruch 11, dadurch gekennzeichnet, daß der Kältemittel-Gas-Wärmetauscher (8) mit einem Kondensatableiter (10) für das ausgetaute Lösemittel und mit einer Verbindungsleitung (12) nach dem Gas-Gas-Wärmetauscher (7) für die Erwärmung des getrockneten Gases verbunden ist, der seinerseits über eine weitere Leitung (5) für die Abgabe des erwärmten trockenen Gases mit dem Verdunstungskessel (2) verbunden ist.

## Claims

1. Method of separating solvents and oils of an oil-solvent solution, wherein the oil-solvent solution in an evaporation boiler (2) is vortexed with a dry gas or gas mixture, the solvent-enriched gas is withdrawn and cooled, the solvent thereby condensed is removed and the solvent-free oil is discharged, characterized in that the oil-solvent solution is sprayed from a nozzle (24) as a mist in the form of a spray cone (25) having the nozzle (24) as the central point and the gas or gas mixture is conveyed through the mist in an axial direction of the spray cone (25).

2. Method according to claim 1, characterized in that the gas liberated from the solvent by intense cooling is heated and vortexed once more with the oil-solvent solution.

3. Method according to claim 1 or 2, characterized in that the gas flow and the oil-solvent solution flow are cocurrent.

4. Method according to claim 1 or 2, characterized in that the gas flow and the oil-solvent solution flow are countercurrent.

5. Device for separating solvents and oils of an oil-solvent solution, in which the oil-solvent solution in an evaporation boiler (2) may be vortexed with a dry gas or gas mixture, the solvent-enriched gas may be withdrawn and cooled, the solvent thereby condensed may be removed and the solvent-free oil may be discharged, characterized in that the oil-solvent solution may be directed by a nozzle (24) disposed in the evaporation boiler (2) towards a deflector plate (19) and may be sprayed from said plate as a mist in the form of a spray cone (25) having the nozzle (24) as the central point and the gas or gas mixture may be conveyed through the mist in an axial direction of the spray cone (25).

6. Device for separating solvents and oils of an oil-solvent solution, in which the oil-solvent solution in an evaporation boiler (2) may be vortexed with a dry gas or gas mixture, the solvent-enriched gas may be withdrawn and cooled, the solvent thereby condensed may be removed and the solvent-free oil may be discharged, characterized in that the oil-solvent solution may be sprayed by a nozzle (24), which is surrounded by an inner pipe provided in the evaporation boiler (2), as a mist in the form of a spray cone (25) having the nozzle (24) as the central point and the gas or gas mixture may be conveyed through the mist in an axial direction of the spray cone (25).

7. Device according to claim 6, characterized in that the nozzle (24) is surrounded by a pipe piece (27) via which the dry gas may be conveyed to the evaporation boiler (2).

8. Device according to claim 6 in conjunction with claim 5, characterized in that the deflector plate (19), towards which the nozzle (24) is directed, is provided in the inner pipe (26).

9. Device according to one of claims 5 to 8, characterized by a cooling device (7; 8) which for the supply of the solvent-enriched gas is connected to the evaporation boiler (2) and is provided with lines for the removal of the condensed solvent and for the discharge of the dried gas.

10. Device according to claim 9, characterized in that a fan (22) is disposed between an outlet opening (6) in the evaporation boiler (2) for the solvent-enriched gas and the cooling device (7; 8).

11. Device according to claim 9 or 10, characterized in that the cooling device (7; 8) is divided into a gas-gas heat exchanger (7) for pre-cooling and a downstream coolant-gas heat exchanger (8) for drying the solvent-enriched gas.

12. Device according to claim 11, characterized in that the coolant-gas heat exchanger (8) is connected to a condensate removal device (10) for the condensed solvent and to a connection line (12) downstream of the gas-gas heat exchanger (7) for heating the dried gas, the gas-gas heat exchanger in turn being connected by a further line (5) to the evaporation boiler (2) for delivery of the heated dry gas.

## Revendications

1. Procédé de séparation d'huiles et de solvants à partir d'une solution d'huile et de solvant, dans lequel la solution d'huile et de solvant est animée d'un mouvement tourbillonnaire dans une chaudière évaporative (2), avec un gaz déshydraté et/ou un mélange de gaz, le gaz enrichi en solvant est évacué et refroidi, le solvant, séparé par condensation, est éliminé, et l'huile exempte de solvant est évacuée, caractérisé en ce que la solution d'huile et de solvant est projetée par une buse (24) dans la chaudière évaporative (2), sous forme de brouillard, en forme d'un cône de projection (25) avec la buse (24) comme point central, le gaz et/ou le mélange de gaz étant injecté au travers du brouillard, dans le sens axial du cône de projection (25).

2. Procédé suivant la revendication 1, caractérisé en ce que le gaz, débarassé du solvant par un refroidissement intensif, est réchauffé et animé d'un nouveau mouvement tourbillonnaire avec la solution d'huile et de solvant.

3. Procédé suivant l'une des revendications 1 et 2, caractérisé en ce que le gaz et la solution d'huile et de solvant sont injectés en courants parallèles.

4. Procédé suivant l'une des revendications 1 et 2, caractérisé en ce que le gaz et la solution d'huile et de solvant sont injectés à contre-courant.

5. Dispositif de séparation de solvants et d'huiles à partir d'une solution d'huile et de solvant, dans lequel la solution d'huile et de solvant peut être animée d'un mouvement tourbillonnaire, dans une chaudière évaporative (2), avec un gaz déshydraté et/ou un mélange de gaz, le gaz enrichi en solvant peut être évacué et refroidi, le solvant, séparé par condensation, peut être éliminé, et l'huile, exempte de solvant, peut être évacuée, caractérisé en ce que la solution d'huile et de solvant peut être pulvérisée par une buse (24), disposée dans la chaudière évaporative (2), déviée sur une plaque de rebondissement (19) et projetée par cette dernière, sous forme de brouillard, en forme d'un cône de projection (25) avec la buse (24) comme point central, le gaz et/ou le mélange de gaz pouvant être injecté au travers du brouillard, dans le sens axial du cône de projection (25).

6. Dispositif pour la séparation de solvants et d'huiles à partir d'une solution d'huile et de solvant, dans lequel la solution d'huile et de solvant peut être animée d'un mouvement tourbillonnaire, dans une chaudière évaporative (2), avec un gaz déshydraté et/ou un mélange de gaz, le gaz enrichi en solvant peut être évacué et refroidi, le solvant, séparé par condensation, peut être éliminé, et l'huile exempte de solvant peut être évacuée, caractérisé en ce que la solution d'huile et de solvant peut être projetée par une buse (24), enveloppée par un conduit interne prévu dans la chaudière évaporative (2), sous forme de brouillard, en forme d'un cône de projection (25) avec la buse (24) comme point central, le gaz et/ou le mélange de gaz pouvant être injecté au travers du brouillard, dans le sens axial du cône de projection (25).

7. Dispositif suivant la revendication 6, caractérisé en ce que la buse (24) est enveloppée par une pièce tubulaire (27), par l'intermédiaire de laquelle le gaz déshydraté est envoyé dans la chaudière évaporative (2).

8. Dispositif suivant la revendication 6, en combinaison avec la revendication 5, caractérisé en ce que la plaque de rebondissement (19), prévue dans le conduit interne (26) de la chaudière évaporative (2), est orientée à l'opposé de la buse (24).

9. Dispositif suivant l'une quelconque des revendications 5 à 8, caractérisé par un dispositif de refroidissement (7; 8), relié à la chaudière évaporative (2) pour l'arrivée du gaz enrichi en solvant, et muni de conduites pour l'élimination du solvant, séparé par condensation, et pour l'évacuation du gaz déshydraté.

10. Dispositif suivant la revendication 9, caractérisé en ce qu'un ventilateur (22) est disposé entre l'orifice de décharge (6) de la chaudière évaporative (2), pour le gaz enrichi en solvant, et le dispositif de refroidissement (7; 8).

11. Dispositif suivant l'une des revendications 9 et 10, caractérisé en ce que le dispositif de refroidissement (7; 8) est subdivisé en un échangeur gaz - gaz (7), pour le prérefroidissement, et en un échangeur gaz - frigorigène (8) aval, pour la déshydratation du gaz enrichi en solvant.

12. Dispositif suivant la revendication 11, caractérisé en ce que l'échangeur gaz - frigorigène (8) est raccordé à un purgeur (10) pour le solvant séparé par condensation, et à une conduite de jonction (12), en aval de l'échangeur gaz - gaz (7), pour réchauffer le gaz déshydraté, l'échangeur précité étant lui-même relié par une autre conduite (16) à la chaudière évaporative (2), pour céder le gaz déshydraté réchauffé.
